(19) Europäisches Patentamt
European Patent Office
Office européen des brevets

(11) **EP 1 991 597 B1**

(12) **EUROPEAN PATENT SPECIFICATION**

(45) Date of publication and mention
of the grant of the patent:
**23.02.2011 Bulletin 2011/08**

(51) Int Cl.:
**C08G 18/12** *(2006.01)*     **C08G 18/48** *(2006.01)*
**C09J 175/04** *(2006.01)*

(21) Application number: **07869551.7**

(22) Date of filing: **19.12.2007**

(86) International application number:
**PCT/US2007/088197**

(87) International publication number:
**WO 2008/077120 (26.06.2008 Gazette 2008/26)**

(54) **COMPOSITION COMPRISING POLYURETHANE DISPERSION HAVING HIGH SOLIDS CONTENT**

ZUSAMMENSETZUNG MIT EINER POLYURETHAN-DISPERSION MIT HOHEM FESTSTOFFANTEIL

COMPOSITION D'ÉTANCHÉITÉ CONTENANT UNE DISPERSION DE POLYURÉTHANE À FORTE TENEUR EN SOLIDES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.12.2006   US 875656 P**

(43) Date of publication of application:
**19.11.2008   Bulletin 2008/47**

(73) Proprietor: **DOW GLOBAL TECHNOLOGIES INC.**
**Midland, MI 48674 (US)**

(72) Inventors:
 • **BEDRI, Erdem**
   **Midland, MI 48640 (US)**
 • **BHATTACHARJEE, Debkumar**
   **Lake Jackson, TX 77566 (US)**
 • **JIN, Yi**
   **Lake Jackson, TX 77566 (US)**
 • **HENTZ, Hermann**
   **Apex, NC 27502 (US)**
 • **RADHAKRISHNAN, Bindushree**
   **Lake Jackson, TX 77566 (US)**

(74) Representative: **Weiss, Wolfgang**
**Weickmann & Weickmann**
**Patentanwälte**
**Postfach 86 08 20**
**81635 München (DE)**

(56) References cited:
**GB-A- 1 162 409        US-A- 6 087 440**
**US-A1- 2006 128 885**

**Description**

**Background of the Invention**

Inability to produce aqueous polyurethane dispersions with ultra-high solid contents prevents their performance in many different applications such as sealant applications. Aqueous polyurethane dispersions with low solid contents result in unacceptable levels of shrinkage upon drying, inability to incorporate higher levels of fillers into final sealant compositions, and requiring longer times to dry. In addition, ultra-high solid content polyurethane dispersions facilitate lower shipping and storage costs and production reduction time per unit volume of materials.

U.S. Patent No. 4,130,523 discloses aqueous polymer latexes produced by a process in which a portion of a forming latex in a reaction zone is continuously withdrawn from the reaction zone during formation of a stable seed latex and an intermediate latex, and the withdrawn latex is continuously fed back to the reaction zone during the formation of the final latex.

U.S. Patent No. 4,456,726 discloses the method of making highly concentrated, bimodal, aqueous synthetic resin dispersions by the emulsion polymerization of ethylenically unsaturated monomers, in the presence of emulsifiers and free radical-forming initiators, by adding to a first latex containing a first dispersed synthetic resin and an aqueous phase, a second latex containing a second dispersed synthetic resin and an aqueous phase and a monomer phase containing a free-radically polymerizable monomer, and then polymerizing the monomer, the average size of the particles of said first resin differing by a factor between 2 and 15 from that of the particles of second resin, the total weight of the resins and monomers representing 100 parts by weight, and the total weight of the aqueous phases representing not more than 70 parts by weight.

U.S. Patent No. 5,340,858 discloses final aqueous polymer dispersions that are obtainable by polymerizing radical polymerizable monomers with the addition of an aqueous dispersion of a starting polymer by the method of free radical aqueous emulsion polymerization.

U.S. Patent No. 5,340,859 discloses an aqueous polymer dispersion which is obtainable by polymerizing monomers by the method of free radical aqueous emulsion polymerization with the addition of at least two starting polymer dispersions, of which one contains not only particularly finely divided but also coarsely divided polymer particles.

U.S. Patent No. 5,350,787 discloses an aqueous polymer dispersion which is obtainable by polymerizing at least one radical polymerizable monomer by the method of free radical aqueous emulsion polymerization with the addition of an aqueous dispersion of a starting polymer.

U.S. Patent No. 5,426,146 discloses an aqueous polymer dispersion which is obtainable by polymerizing radical polymerizable monomers other than vinyl or vinylidene halides by the method of free radical aqueous emulsion polymerization with the addition of an aqueous starting polymer dispersion having a certain diameter distribution of the starting polymer particles present therein by the stream addition process.

U.S. Patent No. 5,496,882 discloses an aqueous polymer dispersion which is obtainable by polymerizing at least one radical polymerizable monomer by the method of free radical aqueous emulsion polymerization with the addition of an aqueous dispersion of a starting polymer.

U.S. Patent No. 5,498,655 discloses an aqueous polymer dispersion which is obtainable by polymerizing radical polymerizable monomers other than vinyl or vinylidene halides by the method of free radical aqueous emulsion polymerization with the addition of an aqueous starting polymer dispersion having a certain diameter distribution of the starting polymer particles present therein by the stream addition process.

GB 1,162,409 discloses a process for the preparation of modified aqueous dispersions in which an aqueous dispersion of a polymer or a copolymer of an olefinically unsaturated monomer containing groups capable of reacting with NCO groups is reacted with a reaction product containing free NCO groups.

US patent application publication No. 2006/0128885 A1 relates to aqueous polyurethane-polyurea dispersions having two discrete maxima in the particle size distribution and a process for preparing said dispersions.

US Pat. No. 6,087,440 discloses processes for preparing a high solid content polyurethane/urea/thiourea latex from a urethane/urea/thiourea prepolymer, which is contacted with a chain extending reagent. By way of example, a solid content of 53.85% by weight is disclosed.

Despite the research efforts in developing ultra-high solid content polyurethane dispersions for different application, there is still a need for ultra-high solid content polyurethane dispersions suitable for sealant applications that provide reduced shrinkage upon drying, facilitate loading of additional fillers, and requiring relatively lesser amounts of time to dry.

**Summary of the Invention**

The instant invention is a sealant composition comprising an ultra-high solid polyurethane dispersion. The ultra-high solid polyurethane dispersion comprises (1) a first component comprising a first polyurethane prepolymer or a first polyurethane prepolymer emulsion, (2) a second component comprising a media phase selected from the group consisting of a second polyurethane prepolymer emulsion, a low solid content polyurethane dispersion, a seed latex, and combinations thereof; and (3) a chain extender. The ultra-high solid polyurethane dispersion has at least a solid content of at least 65 percent by weight of solid content, based on the total weight of the ultra-high solid polyurethane dispersion, and a viscosity of less than 5000 cps at 20 rpm at 21°Cusing spindle #4 with Brookfield viscometer. The sealant composition may further include optionally one or more surfactants, optionally one or more dispersants, optionally one or more thickeners, optionally one or more pigments, optionally one or more fillers, optionally one or more freeze-thaw agent, optionally one or more neutralizing agents, optionally one or more plasticizers, and/or combinations thereof.

## Brief Description of the Drawings

For the purpose of illustrating the invention, there is shown in the drawings an exemplary form; it being understood, however, that this invention is not limited to the precise arrangements and instrumentalities shown.

**Fig. 1** is a block diagram illustrating a method of making an ultra-high solid content polyurethane dispersion suitable for sealant applications;
**Fig. 2** is a block diagram illustrating a first alternative method of making an ultra-high solid content polyurethane dispersion suitable for sealant applications; and
**Fig. 3** is a block diagram illustrating a second alternative method of making an ultra-high solid content polyurethane dispersion suitable for sealant applications.

## Detailed Description of the Invention

The instant invention is a sealant composition. The instant invention is a sealant composition comprising an ultra-high solid polyurethane dispersion. The ultra-high solid polyurethane dispersion comprises (1) a first component comprising a first polyurethane prepolymer or a first polyurethane prepolymer emulsion, (2) a second component comprising a media phase selected from the group consisting of a second polyurethane prepolymer emulsion, a low solid content polyurethane dispersion, a seed latex, and combinations thereof; and (3) a chain extender. The ultra-high solid polyurethane dispersion has at least a solid content of at least 65 percent by weight of solid content, based on the total weight of the ultra-high solid polyurethane dispersion, and a viscosity of less than 5000 cps at 20 rpm at 21° C using spindle #4 with Brookfield viscometer. The sealant composition may further include optionally one or more surfactants, optionally one or more dispersants, optionally one or more thickeners, optionally one or more pigments, optionally one or more fillers, optionally one or more freeze-thaw agent, optionally one or more neutralizing agents, optionally one or more plasticizers, and/or combinations thereof.

The terms "polyurethane" and "poly (urea-urethane)," as used herein, may be used interchangeably.

The sealant composition comprises an ultra-high solid content polyurethane dispersion, as described in further details hereinbelow. The sealant composition may further include optionally one or more surfactants, optionally one or more dispersants, optionally one or more thickeners, optionally one or more pigments, optionally one or more fillers, optionally one or more freeze-thaw agent, optionally one or more neutralizing agents, optionally one or more plasticizers, and/or combinations thereof. The sealant composition may further include any other additives. Other exemplary additives include, but are not limited to, mildewcides, fungicides.

The sealant composition may have any elongation flexibility at -25 °C.; for example, the sealant composition may have an elongation flexibility of at least 400 percent at -25 °C. All individual values and subranges from at least 400 percent at -25 °C. are included herein and disclosed herein; for example, the sealant composition may have an elongation of at least 500 percent at -25 °C; or in the alternative, the sealant composition may have an elongation of at least 600 percent at -25 °C or in another alternative, the sealant composition may have an elongation of at least 650 percent at -25 °C. In one embodiment, the sealant composition, essentially free of any pigments, may have an elongation flexibility of at least 400 percent at -25 °C. Essentially free of pigments, as used herein, refers to a pigment weight percent in the range of 0 to less than 0.1, based on the weight of the sealant composition. In an alternative embodiment, the sealant composition comprising 0.1 to 10 percent by weight of one or more pigments may have an elongation flexibility of at least 650 percent at -25 °C. The sealant composition may have any elastic recovery; for example, the sealant composition may have an elastic recovery of at least 50 percent at -25 °C. All individual values and subranges from at least 50 percent at -25 °C. are included herein and disclosed herein; for example, the sealant composition may have an elastic recovery of at least 60 percent at -25 °C; or in the alternative, the sealant composition may have an elastic recovery of at least 70 percent at -25 °C; or in another alternative, the sealant composition may have an elastic recovery of at least 80 percent at -25 °C. The Sealant composition may have any shrinkage; for example, the sealant composition may have a shrinkage of less than 20 percent. All individual values and subranges from less than 20 percent are included herein and disclosed herein; for example, the sealant composition may have a shrinkage of less than 19 percent; or in the alternative, the sealant composition may have a shrinkage of less than 18 percent; or in the alternative, the sealant composition may have a shrinkage of less than 15 percent. The sealant composition may be dried in a shorter period of time relative to other sealant composition.

The sealant composition may further include optionally one or more surfactants. The sealant composition may comprise 0.1 to 5 percent by weight of one or more surfactants. All individual values and subranges from 0.1 to 5 weight percent are included herein and disclosed herein; for example, the weight percent of surfactant can be from a lower limit of 0.1, 0.2, 0.3, or 0.5 weight percent to an upper limit of 1, 2, 3, 4, or 5 weight percent. For example, sealant composition may comprise 0.1 to 4 percent by weight of one or more surfactants; or in the alternative, sealant composition may comprise 0.1 to 3 percent by weight of one or more surfactants; or in the alternative, sealant composition may comprise 0.1 to 2 percent by weight of one or more surfactants; or in the alternative, sealant composition may comprise 0.1 to 1 percent by weight of one or more surfactants. Such surfactants are commercially available under the tradename Triton™ X-405 from the Dow Chemical Company, Midland, Michigan.

The sealant composition may further include optionally one or more dispersants. The sealant composition may comprise 0.1 to 5 percent by weight of one or more dispersants. All individual values and subranges from 0.1 to 5 weight percent are included herein and disclosed herein; for example, the weight percent of dispersants can be from a lower limit of 0.1, 0.2, 0.3, or 0.5 weight percent to an upper limit of 1, 2, 3, 4, or 5 weight percent. For example, sealant composition may comprise 0.1 to 4 percent by weight of one or more dispersants; or in the alternative, sealant composition may comprise 0.1 to 3 percent by weight of one or more dispersants; or in the alternative, sealant composition may comprise 0.1 to 2 percent by weight of one or more dispersants; or in the alternative, sealant composition may comprise 0.1 to 1 percent by weight of one or more dispersants. Such surfactants are commercially available under the tradename Tamol™ from Rohm and Has, Philadelphia, USA.

The sealant composition may further include optionally one or more thickeners. The sealant composition may comprise 0.1 to 5 percent by weight of one or more thickeners. All individual values and subranges from 0.1 to 5 weight percent are included herein and disclosed herein; for example, the weight percent of thickeners can be from a lower limit of 0.1, 0.2, 0.3, or 0.5 weight percent to an upper limit of 1, 2, 3, 4, or 5 weight percent. For example, sealant composition may comprise 0.1 to 4 percent by weight of one or more thickeners; or in the alternative, sealant composition may comprise 0.1 to 3 percent by weight of one or more thickeners; or in the alternative, sealant composition may comprise 0.1 to 2 percent by weight of one or more thickeners; or in the alternative, sealant composition may comprise 0.1 to 1 percent by weight of one or more thickeners. Such thikeners are commercially available under the tradename UCAR™ or Celosize™ from the Dow Chemical Company, Midland, Michigan.

The sealant composition may further include optionally one or more pigments. The sealant composition may comprise 0 to 10 percent by weight of one or more pigments. All individual values and subranges from 0 to 10 weight percent are included herein and disclosed herein; for example, the weight percent of pigments can be from a lower limit of 0.1, 0.2, 0.3, 0.5, 1, 2, 3, 4, or 5 weight percent to an upper limit of 1, 2, 3, 4, 5, 6, 7, 8, 9, or 10 weight percent. For example, sealant composition may comprise 0 to 9 percent by weight of one or more pigments; or in the alternative, sealant composition may comprise 0.1 to 8 percent by weight of one or more pigments; or in the alternative, sealant composition may comprise 0.1 to 7 percent by weight of one or more pigments; or in the alternative, sealant composition may comprise 0.1 to 6 percent by weight of one or more pigments. Such pigments include, but are not limited to, titanium dioxide, which are commercially available under the tradename Ti-Pure™ from the Du-Pont, Wilmington, DE, USA.

The sealant composition may further include optionally one or more fillers. The sealant composition may comprise 0 to 80 percent by weight of one or more fillers. All individual values and subranges from 0 to 80 weight percent are included herein and disclosed herein; for example, the weight percent of fillers can be from a lower limit of 0.1, 0.2, 0.3, 0.5, 1, 2, 3, 4, 5, or 10 weight percent to an upper limit of 15, 20, 25, 35, 45, 55, 65, 75, or 80 weight percent. For example, sealant composition may comprise 0 to 75 percent by weight of one or more fillers; or in the alternative, sealant composition may comprise 0 to 65 percent by weight of one or more fillers; or in the alternative, sealant composition may comprise 0 to 55 percent by weight of one or more fillers; or in the alternative, sealant composition may comprise 0 to 45 percent by weight of one or more fillers. Such fillers include, but are not limited to, calcium carbonate, commercially available under the tradename Drikalite™ from the Imeyrys, Victoria, Australia, barium sulfate, aluminum silicate, ceramic micro-spheres, glass micro-spheres, and fly ash.

The sealant composition may further include optionally one or more freeze-thaw agents. The sealant composition may comprise 0.1 to 2 percent by weight of one or more freeze-thaw agents. All individual values and subranges from 0.1 to 2 weight percent are included herein and disclosed herein; for example, the weight percent of freeze-thaw agents can be from a lower limit of 0.1, 0.2, 0.3, or 0.5 weight percent to an upper limit of 05, 1, 1.5, or 2 weight percent. For example, sealant composition may comprise 0.1 to 2 percent by weight of one or more freeze-thaw agents; or in the alternative, sealant composition may comprise 0.1 to 1.5 percent by weight of one or more freeze-thaw agents; or in the alternative, sealant composition may comprise 0.1 to 1 percent by weight of one or more freeze-thaw agents; or in the alternative, sealant composition may comprise 0.1 to 0.5 percent by weight of one or more freeze-thaw agents. Freeze-thaw agents, as used herein, refer to additives that typically prevent coagulation of the dispersion when exposed to extreme temperature cycles. Such freeze-thaw agents include, but are not limited to, glycols such as ethylene glycol, diethylene glycol, propylene glycol, dipropylene glycol, butylene glycol, dibutylene glycol. Such glycols are commercially available from the Dow Chemical Company, Midland, Michigan.

The sealant composition may further include optionally one or more neutralizing agents. The sealant composition may comprise 0.1 to 2 percent by weight of one or more neutralizing agents. All individual values and subranges from 0.1 to 2 weight percent are included herein and disclosed herein; for example, the weight percent of neutralizing agents can be from a lower limit of 0.1, 0.2, 0.3, or 0.5 weight percent to an upper limit of 05, 1, 1.5, or 2 weight percent. For example, sealant composition may comprise 0.1 to 2 percent by weight of one or more neutralizing agents; or in the alternative, sealant composition may comprise 0.1 to 1.5 percent by weight of one or more neutralizing agents; or in the alternative, sealant composition may comprise 0.1 to 1 percent by weight of one or more neutralizing agents; or in the alternative, sealant composition may comprise 0.1 to 0.5 percent by weight of one or more neutralizing agents. Neutralizing agents are typically used to control pH to provide stability to the formulated sealant composition. Such neutralizing agents include, but are not limited to, aqueous ammonia or aqueous amines, or.other aqueous inorganic salts.

The sealant composition may further include optionally one or more plasticizers. The sealant composition may comprise 0 to 12 percent by weight of one or more plasticizers. All individual values and subranges from 0 to 12 weight percent are included herein and disclosed herein; for example, the weight percent of plasticizers can be from a lower limit of 0.1, 0.2, 0.3, 0.5, 1, 2, 3, 4, or 5 weight percent to an upper limit of 1, 2, 3, 4, 5, 6, 7, 8, 9, 10, or 12 weight percent. For example, sealant composition may comprise 0 to 12 percent by weight of one or more plasticizers; or in the alternative, sealant composition may comprise 0 to 10 percent by weight of one or more plasticizers; or in the alternative, sealant composition may comprise 0 to 7 percent by weight of one or more plasticizers; or in the alternative, sealant composition may comprise 0 to 6 percent by weight of one or more plasticizers. Such plasticizers are commercially available under the tradename Jayflex™ from ExxonMobil Chemical Company, Texas, USA.

The sealant composition may comprise 25 to less than 100 percent by weight of ultra-high solid polyurethane dispersion. All individual values and subranges from 25 to less than 100 weight percent are included herein and disclosed herein; for example, the weight percent of ultra-high solid polyurethane dispersion can be from a lower limit of 25, 30, 35, 45, 55, or 65 weight percent to an upper limit of 35, 45, 55, 65, 70, 80, 85, 90, 95, or 99 weight percent. For example, sealant composition may comprise 35 to less than 100 percent by weight of ultra-high solid polyurethane dispersion; or in the alternative, sealant composition may comprise 45 to less than 100 percent by weight of ultra-high solid polyurethane dispersion; or in the alternative, sealant composition may comprise 55 to less than 100 percent by weight of ultra-high solid polyurethane dispersion; or in the alternative, sealant composition may comprise 65 to less than 100 percent by weight of ultra-high solid polyurethane dispersion.

The ultra-high solid polyurethane dispersion comprises (1) a first component comprising a first polyurethane prepolymer or a first polyurethane prepolymer emulsion, (2) a seconds component comprising a media phase selected from the group consisting of a second polyurethane prepolymer emulsion, a low solid content polyurethane dispersion, a seed latex, and combinations thereof; and (3) a chain extender. The ultra-high solid content polyurethane dispersion may have any number of polymers; for example, the ultra-high solid content polyurethane dispersion may comprise at least two or more different polymers. The ultra-high solid content polyurethane dispersion may, for example, comprise a first polymer and a second polymer. First polymer may, for example, be a first polyurethane, and the second polymer may be a second polyurethane, polyolefin, polyacrylate, combinations thereof, or the like. The ultra-high solid content polyurethane dispersion may comprise from 5 to 95 percent by weigh of the first polymer, and from 5 to 95 percent by weight of the second polymer, based on the total weight of the ultra-high solid content polyurethane dispersion. All individual values and subranges from 5 to 95 weight percent are included herein and disclosed herein; for example, ultra-high solid content polyurethane dispersion may comprise from 5 to 45 percent by weigh of the first polymer, and from 55 to 95 percent by weight of the second polymer, based on the total weight of the ultra-high solid content polyurethane dispersion; or in the alternative, ultra-high solid content polyurethane dispersion may comprise from 20 to 60 percent by weigh of the first polymer, and from 40 to 80 percent by weight of the second polymer, based on the total weight of the ultra-high solid content polyurethane dispersion.

The ultra-high solid content polyurethane dispersion may comprise at least 65 percent by weight of solid content, excluding the weight of any filler, based on the total weight of the ultra-high solid content polyurethane dispersion; or in the alternative, the ultra-high solid content polyurethane dispersion may comprise at least 70 percent by weight of solid content, excluding the weight of any filler, based on the total weight of the ultra-high solid content polyurethane dispersion. The ultra-high solid content polyurethane dispersion may comprise less than 40 percent by weight of water, based on the total weight of the ultra-high solid content polyurethane dispersion. All individual values and subranges of less than 40 weight percent are included herein and disclosed herein; for example, the ultra-high solid content polyurethane dispersion may comprise less than 35 percent by weight of water, based on the total weight of the ultra-high solid content polyurethane dispersion; or in the alternative, the ultra-high solid content polyurethane dispersion may comprise less than 30 percent by weight of water, based on the total weight of the ultra-high solid content polyurethane dispersion. The ultra-high solid content polyurethane dispersion may, for example, comprise of at least two volume average particle size diameters; for example, the ultra-high solid content polyurethane dispersion may, for example, comprise of a first volume average particle size diameter, and a second volume average particle size diameter. Volume average particle size diameter, as used herein, refers to $Dv = \left[ \dfrac{\sum n_i d_i^3}{\sum n_i} \right]^{1/3}$; wherein where Dv is the volume average particle size,

$n_i$ is the number of particles of diameter $d_i$; and Polydispersity index ("PDI"), as used herein refers to

$$PDI = \dfrac{\left[ \dfrac{\sum n_n d_i^4}{\sum n_i d_i} \right]}{\left[ \dfrac{\sum n_i d_i}{\sum n_i} \right]}.$$

Additionally, the ultra-high solid content polyurethane dispersion may comprise particles having one or more volume average particle size diameters. The first volume average particle size diameter may be in the range of 0.05 to 5.0 micron. All individual values and subranges from 0.05 to 5.0 micron are included herein and disclosed herein; for example, the first volume average particle size diameter may be in the range of 0.07 to 1.0 micron; or in the alternative, the first volume average particle size diameter may be in the range of 0.08 to 0.2 micron. The second volume average particle size diameter may be in the range of 0.05 to 5.0 micron. All individual values and subranges from 0.05 to 5.0 micron are included herein and disclosed herein; for example, the second volume average particle size diameter may be in the range of 0.07 to 1.0 micron; or in the alternative, the second volume average particle size diameter may be in the range of 0.08 to 0.2 micron. The ultra-high solid content polyurethane dispersion may have a bimodal or multimodal particle size distribution. The ultra-high solid content polyurethane dispersion may have any particle size distributions; for example, the ultra-high solid content polyurethane dispersion may have a particle size distribution in the range of 1: 2 to 1:20 based on the percent volume of first volume average particle size diameter to the second volume average particle size diameter. All individual values and subranges from 1: 2 to 1:20 are included herein and disclosed herein; for example, the ultra-high solid content polyurethane dispersion may have a particle size distribution in the range of 1: 2 to 1:10 based on the percent volume of the first volume average particle size diameter to second volume average particle size; or in the alternative, the ultra-high solid content polyurethane dispersion may have a particle size distribution in the range of 1:3 to 1:5 based on the percent volume of the first volume average particle size diameter to the second volume average particle size diameter. The particle volume average particle size diameter and particle size distribution are important factors to the instant invention because these factors facilitate the production of the inventive ultra-high solid content polyurethane dispersions while maintaining lower viscosities. The ultra-high solid content polyurethane dispersion may have a polydispersity index ($M_w/M_z$) in the range of less than 5. All individual values and subranges in the range of less than 5 are included herein and disclosed herein; for example, the ultra-high solid content polyurethane dispersion may have a polydispersity index ($M_w/M_z$) in the range of less than 3; or in the alternative, the ultra-high solid content polyurethane dispersion may have a polydispersity index ($M_w/M_z$) in the range of less than 2. The ultra-high solid content polyurethane dispersion may have a viscosity in the range of less than 5000 cps at 20 rpm at 21° C using spindle #4 with Brookfield viscometer. All individual values and subranges in the range of less than 5000 cps at 20 rpm at 21° C using spindle #4 with Brookfield viscometer are included herein and disclosed herein; for example, the ultra-high solid content polyurethane dispersion may have a viscosity in the range of less than 4000 cps at 20 rpm at 21° C using spindle #4 with Brookfield viscometer; or in the alternative, the ultra-high solid content polyurethane dispersion may have a viscosity in the range of less than 3500 cps at 20 rpm at 21° C using spindle #4 with Brookfield viscometer.

The first component may be a first polyurethane prepolymer or a first polyurethane prepolymer emulsion.

The term "first polyurethane prepolymer," as used herein refers to a stream containing a first polyurethane prepolymer. The first polyurethane prepolymer contains substantially no organic solvent and also has at least two isocyanate groups per one molecule. Such a first urethane prepolymer, as used herein, further refers to a polyurethane prepolymer wherein the content of the organic solvent in the polyurethane prepolymer is 10% by weight or less based on the total weight of the first polyurethane prepolymer. To eliminate the step of removing the organic solvent, the content of the organic solvent may, for example, be 5% by weight or less based on the total weight of the first polyurethane prepolymer; or in the alternative, the content of the organic solvent may be 1% by weight or less based on the total weight of the first polyurethane prepolymer; or in another alternative, the content of the organic solvent may be 0.1% by weight or less based on the total weight of the first polyurethane prepolymer.

The number average molecular weight of the first polyurethane prepolymer used in the present invention may, for example, be within the range from 1,000 to 200,000. All individual values and subranges from 1,000 to 200,000 are included herein and disclosed herein; for example, the first polyurethane prepolymer may have a number average molecular weight in the range of 2,000 to about 20,000. The polyurethane prepolymer may further include small amounts of monomeric isocyanates.

The first polyurethane prepolymer used in the present invention may be produced by any conventionally known processes, for example, solution process, hot melt process, or prepolymer mixing process. Furthermore, the first polyurethane prepolymer may, for example, be produced via a process for reacting a polyisocyanate compound with an active hydrogen-containing compound and examples thereof include 1) a process for reacting a polyisocyanate compound with a polyol compound without using an organic solvent, and 2) a process for reacting a polyisocyanate compound with a polyol compound in an organic solvent, followed by removal of the solvent.

For example, the polyisocyanate compound may be reacted with the active hydrogen-containing compound at a temperature in the range of 20 °C to 120 °C; or in the alternative, in the range of 30 °C to 100 °C, at an equivalent ratio of an isocyanate group to an active hydrogen group of, for example, from 1.1:1 to 3:1; or in the alternative, from 1.2:1 to 2:1. In the alternative, the prepolymer may be prepared with an.excess amount of polyols thereby facilitating the production of hydroxyl terminal polymers.

For example, an excess isocyanate group may optionally be reacted with aminosilane, thereby converting the terminal group into a reactive group other than isocyanate group, such as an alkoxysilyl group.

The first polyurethane prepolymer may further include a polymerizable acrylic, styrenic, or vinyl monomers as a diluent, which can then be polymerized by free radical polymerization via an initiator.

Examples of the polyisocyanate compound include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3 and 1,4-bis(isocyanatemethyl) isocynate, xylylene diisocyanate, tetramethylxylylene diisocyanate, hydrogenated xylylene diisocyanate, lysine diisocyanate, isophorone diisocyanate, 4,4'-dicyclohexylmethane diisocyanate, 3,3'-dimethyl-4,4'-dicyclohexylmethane diisocyanate, isomers thereof, and/or combinations thereof.

The active hydrogen-containing compound used to produce the first polyurethane prepolymer used in the present invention includes, but is not limited to, for example, a compound having comparatively high molecular weight (hereinafter referred to as a first high-molecular weight compound) and a compound having comparatively low molecular weight (hereinafter referred to as a first low-molecular weight compound).

The number average molecular weight of the first high-molecular weight compound may, for example, be within a range from 300 to 20,000; or in the alternative, within a range from 500 to 5,000. The number average molecular weight of the first low-molecular weight compound may, for example, be less than 300. These active hydrogen-containing compounds may be used alone, or two or more kinds of them may be used in combination.

Among these active hydrogen-containing compounds, examples of the first high-molecular weight compound include, but are not limited to aliphatic and aromatic polyester polyols including caprolactone based polyester polyols, seed oil based polyester polyols, any polyester/polyether hybrid polyols, PTMEG-based polyether polyols; polyether polyols based on ethylene oxide, propylene oxide, butylene oxide and mixtures thereof; polycarbonate polyols; polyacetal polyols, polyacrylate polyols; polyesteramide polyols; polythioether polyols; polyolefin polyols such as saturated or unsaturated polybutadiene polyols.

As the polyester polyol, polyester polyol, for example, obtained by the polycondensation reaction of a glycol and an acid may be used.

Examples of the glycol, which can be used to obtain the polyester polyol, include, but are not limited to, ethylene glycol, propylene glycol, 1,3-propanediol, 1,4-butanediol, 1,5-pentanediol, 3-methyl-1,5-pentanediol, 1,6-hexanediol, neopentyl glycol, diethylene glycol, triethylene glycol, tetraethylene glycol, polyethylene glycol, dipropylene glycol, tripropylene glycol, bishydroxyethoxybenzene, 1,4-cyclohexanediol, 1,4-cyclohexanedimethanol, bisphenol A, mixture of 1,3- and 1,4-cyclohexanedimethanol (UNOXOL™-diol), hydrogenated bisphenol A, hydroquinone, and alkylene oxide adducts thereof.

Examples of the acid, which can be used to obtain the polyester polyol, include, but are not limited to, succinic acid, adipic acid, azelaic acid, sebacic acid, dodecanedicarboxylic acid, maleic anhydride, fumaric acid, 1,3-cyclopentanedicarboxylic acid, 1,4-cyclohexanedicarboxylic acid, terephthalic acid, isophthalic acid, phthalic acid, 1,4-naphthalenedicarboxylic acid, 2, 5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and anhydrides or ester-forming derivatives of these dicarboxylic acids; and p-hydroxybenzoic acid, p-(2-hydroxyethoxy)benzoic acid, and ester-forming derivatives of these hydroxycarboxylic acids.

Also a polyester obtained by the ring-opening polymerization reaction of a cyclic ester compound such as ε-caprolactone, and copolyesters thereof may be used.

The polyester polyols may also be produced by transesterification of the above-mentioned diols and triols with hydroxy group containing fatty acid methyl esters.

Examples of the polyether polyol include, but are not limited to, compounds obtained by the polyaddition reaction of one or more kinds of compounds having at least two active hydrogen atoms such as ethylene glycol, diethylene glycol, triethylene glycol, propylene glycol, trimethylene glycol, 1,3-butanediol, 1,4-butanediol, 1,6-hexanediol, neopentyl glycol, glycerin, trimethylolethane, trimethylolpropane, sorbitol, sucrose, ethylenediamine, diethylenetriamine, triisopropanolamine, pyrogallol, dihydroxybenzoic acid, hydroxyphthalic acid, and 1,2,3-propanetrithiol with one or more kinds among ethylene oxide, propylene oxide, butylene oxide, styrene oxide, epichlorohydrin, and tetrahydrofuran.

Examples of the polycarbonate polyol include, but are not limited to, compounds obtained by the reaction of glycols such as 1,4-butanediol, 1,6-hexanediol, and diethylene glycol, with diphenyl carbonate and phosgene.

Among the active hydrogen-containing compounds, the first low-molecular weight compound is a compound which has at least two active hydrogens per one molecule and has a number average molecular weight of less than 300, and examples thereof include, but are not limited to, glycol components used as raw materials of the polyester polyol; polyhydroxy compounds such as glycerin, trimethylolethane, trimethylolpropane, sorbitol, and pentaerythritol; and amine compounds such as ethylenediamine, 1, 6-hexamethylenediamine, piperazine, 2,5-dimethylpiperazine, isophoronediamine, 4,4'-dicyclohexylmethanediamine, 3,3'-dimethyl-4,4'-dicyclohexylmethanediamine, 1,4-cyclohexanediamine, 1,2-propanediamine, hydazine, diethylenetriamine, and triethylenetetramine.

The first urethane prepolymer may further include a hydrophilic group. The term "hydrophilic group," as used herein, refers to an anionic group (for example, carboxyl group, sulfonic acid group, or phosphoric acid group), or a cationic group (for example, tertiary amino group, or quaternary amino group), or a nonionic hydrophilic group (for example, a group composed of a repeating unit of ethylene oxide, or a group composed of a repeating unit of ethylene oxide and a repeating unit of another alkylene oxide).

Among hydrophilic groups, a nonionic hydrophilic group having a repeating unit of ethylene oxide may, for example, be preferred because the finally obtained polyurethane emulsion has excellent compatibility with other kinds of emulsions. Introduction of a carboxyl group and/or a sulfonic acid group is effective to make the particle size finer.

The ionic group refers to a functional group capable of serving as a hydrophilic ionic group which contributes to self dispersibility in water by neutralization, providing colloidal stability during the processing against agglomeration; stability during shipping, storage and formulation with other additives. These hydrophilic groups could also introduce application specific properties such as adhesion.

When the ionic group is an anionic group, the neutralizer used for neutralization includes, for example, nonvolatile bases such as sodium hydroxide and potassium hydroxide; and volatile bases such as tertiary amines (for example trimethylamine, triethylamine, dimethylethanolamine, methyldiethanolamine, and triethanolamine) and ammonia can be used.

When the ionic group is a cationic group, usable neutralizer includes, for example, inorganic acids such as hydrochloric acid, sulfuric acid, and nitric acid; and organic acids such as formic acid and acetic acid.

Neutralization may be conducted before, during or after the polymerization of the compound having an ionic group. Alternatively, neutralization may be conducted during or after the polyurethane polymerization reaction.

To introduce a hydrophilic group in the first polyurethane prepolymer, a compound, which has at least one active hydrogen atom per one molecule and also has the above hydrophilic group, may be used as an active hydrogen-containing compound. Examples of the compound, which has at least one active hydrogen atom per one molecule and also has the above hydrophilic group, include:

(1) sulfonic acid group-containing compounds such as 2-oxyethanesulfonic acid, phenolsulfonic acid, sulfobenzoic acid, sulfosuccinic acid, 5-sulfoisophthalic acid, sulfanilic acid, 1,3-phenylenediamine-4,6-disulfonic acid, and 2,4-diaminotoluene-5-sulfonic acid, and derivatives thereof, or polyester polyols obtained by copolymerizing them;

(2) carboxylic acid-containing compounds such as 2,2-dimethylolpropionic acid, 2,2-dimethylolbutyric acid, 2,2-dimethylolvaleric acid, dioxymaleic acid, 2,6-dioxybenzoic acid, and 3,4-diaminobenzoic acid, and derivatives thereof, or polyester polyols obtained by copolymerizing them; tertiary amino group-containing compounds such as methyldiethanolamine, butyldiethanolamine, and alkyldiisopropanolamine, and derivatives thereof, or polyester polyol or polyether polyol obtained by copolymerizing them;

(3) reaction products of the above tertiary amino group-containing compounds, or derivatives thereof, or polyester polyols or polyether polyols obtained by copolymerizing them, with quaternizing agents such as methyl chloride, methyl bromide, dimethylsulfuric acid, diethylsulfuric acid, benzyl chloride, benzyl bromide, ethylenechlorohydrin, ethylenebromohydrin, epichlorohydrin, and bromobutane;

(4) nonionic group-containing compounds such as polyoxyethylene glycol or polyoxyethylene-polyoxypropylene copolymer glycol, which has at least 30% by weight of a repeating unit of ethylene oxide and at least one active hydrogen in the polymer and also has a molecular weight of 300 to 20,000, polyoxyethylene-polyoxybutylene copolymer glycol, polyoxyethylene-polyoxyalkylene copolymer glycol, and monoalkyl ether thereof, or polyesterpolyether polyols obtained by copolymerizing them; and
(5) combinations thereof.

The second component may be a selected from the group consisting of a second polyurethane prepolymer, a second polyurethane prepolymer emulsion, a low solid content polyurethane dispersion, a seed latex, and combinations thereof.

The term "second polyurethane prepolymer emulsion," as used herein refers to a stream containing a second polyurethane prepolymer. The second polyurethane prepolymer contains substantially no organic solvent and also has at least two isocyanate groups per one molecule. Such a second polyurethane prepolymer, as used herein, further refers to a polyurethane prepolymer wherein the content of the organic solvent in the polyurethane prepolymer is 10% by weight or less based on the total weight of the second polyurethane prepolymer. To eliminate the step of removing the organic solvent, the content of the organic solvent may, for example, be 5% by weight or less based on the total weight of the second polyurethane prepolymer; or in the alternative, the content of the organic solvent may be 1% by weight or less based on the total weight of the second polyurethane prepolymer; or in another alternative, the content of the organic solvent may be 0.1% by weight or less based on the total weight of the second polyurethane prepolymer.

The number average molecular weight of the second polyurethane prepolymer used in the present invention may, for example, be within the range from 1,000 to 200,000. All individual values and subranges from 1,000 to 200,000 are included herein and disclosed herein; for example, the second polyurethane prepolymer may have a number average molecular weight in the range of 2,000 to about 20,000. The polyurethane prepolymer may further include small amounts of monomeric isocyanates.

The second polyurethane prepolymer used in the present invention may be produced by any conventionally known processes, for example, solution process, hot melt process, or prepolymer mixing process. Furthermore, the second urethane prepolymer may, for example, be produced via a process for reacting a polyisocyanate compound with an active hydrogen-containing compound and examples thereof include 1) a process for reacting a polyisocyanate compound with a polyol compound without using an organic solvent, and 2) a process for reacting a polyisocyanate compound with a polyol compound in an organic solvent, followed by removal of the solvent. The final prepolymer may be NCO or OH terminated.

For example, the polyisocyanate compound may be reacted with the active hydrogen-containing compound at a temperature in the range of 20 °C to 120 °C; or in the alternative, in the range of 30 °C to 100 °C, at an equivalent ratio of an isocyanate group to an active hydrogen group of, for example, from 1.1:1 to 3:1, or in the alternative, from 1.2:1 to 2:1. In the alternative, the prepolymer may be prepared with an excess amount of polyols thereby facilitating the production of hydroxyl terminal polymers.

For example, an excess isocyanate group may optionally be reacted with aminosilane, thereby converting the terminal group into a reactive group other than isocyanate group, such as an alkoxysilyl group.

The second polyurethane prepolymer may further include a polymerizable acrylic, styrenic, or vinyl monomers as a diluent, which can then be polymerized by free radical polymerization via an initiator.

Examples of the polyisocyanate compound include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3 and 1,4-bis(isocyanatemethyl) isocynate, xylylene diisocyanate, tetramethylxylylene diisocyanate, hydrogenated xylylene diisocyanate, lysine diisocyanate, isophorone diisocyanate, 4,4'-dicyclohexylmethane diisocyanate, 3,3'-dimethyl-4,4'-dicyclohexylmethane diisocyanate, isomers thereof, and/or combinations thereof.

The active hydrogen-containing compound used to produce the second polyurethane prepolymer used in the present invention includes, but is not limited to, for example, a compound having comparatively high molecular weight (hereinafter referred to as a second high-molecular weight compound) and a compound having comparatively low molecular weight (hereinafter referred to as a second low-molecular weight compound).

The number average molecular weight of the second high-molecular weight compound may, for example, be within a range from 300 to 20,000; or in the alternative, within a range from 500 to 5,000. The number average molecular weight of the second low-molecular weight compound may, for example, be less than 300. These active hydrogen-containing compounds may be used alone, or two or more kinds of them may be used in combination.

Among these active hydrogen-containing compounds, examples of the second high-molecular weight compound include, but are not limited to aliphatic and aromatic polyester polyols including caprolactone based polyester polyols, seed oil based polyester polyols, any polyester/polyether hybrid polyols, PTMEG-based polyether polyols; polyether polyols based on ethylene oxide, propylene oxide, butylene oxide and mixtures thereof; polycarbonate polyols; polyacetal polyols; polyacrylate polyols; polyesteramide polyols; polythioether polyols; and polyolefin polyols such as saturated or unsaturated polybutadiene polyols.

As the polyester polyol, polyester polyols, for example, obtained by the polycondensation reaction of a glycol and an acid may be used.

Examples of the glycol, which can be used to obtain the polyester polyol, include, but are not limited to, ethylene glycol, propylene glycol, 1,3-propanediol, 1,4-butanediol, 1,5-pentanediol, 3-methyl-1,5-pentanediol, 1,6-hexanediol, neopentyl glycol, diethylene glycol, triethylene glycol, tetraethylene glycol, polyethylene glycol, dipropylene glycol, tripropylene glycol, bishydroxyethoxybenzene, 1,4-cyclohexanediol, 1,4-cyclohexanedimethanol, bisphenol A, mixture of 1,3- and 1,4-cyclohexanedimethanol (UNOXOL™-diol), hydrogenated bisphenol A, hydroquinone, and alkylene oxide adducts thereof.

Examples of the acid, which can be used to obtain the polyester polyol, include, but are not limited to, succinic acid, adipic acid, azelaic acid, sebacic acid, dodecanedicarboxylic acid, maleic anhydride, fumaric acid, 1,3-cyclopentanedicarboxylic acid, 1,4-cyclohexanedicarboxylic acid, terephthalic acid, isophthalic acid, phthalic acid, 1,4-naphthalenedicarboxylic acid, 2, 5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and anhydrides or ester-forming derivatives of these dicarboxylic acids; and p-hydroxybenzoic acid, p-(2-hydroxyethoxy)benzoic acid, and ester-forming derivatives of these hydroxycarboxylic acids.

Also a polyester obtained by the ring-opening polymerization reaction of a cyclic ester compound such as ε-caprolactone, and copolyesters thereof can be used.

The polyester polyols can also be produced by transesterification of the above mentioned diols and triols with hydroxy group containing fatty acid methyl esters.

Examples of the polyether polyol include, but are not limited to, compounds obtained by the polyaddition reaction of one or more kinds of compounds having at least two active hydrogen atoms such as ethylene glycol, diethylene glycol, triethylene glycol, propylene glycol, trimethylene glycol, 1,3-butanediol, 1,4-butanediol, 1,6-hexanediol, neopentyl glycol, glycerin, trimethylolethane, trimethylolpropane, sorbitol, sucrose, ethylenediamine, diethylenetriamine, triisopropanolamine, pyrogallol, dihydroxybenzoic acid, hydroxyphthalic acid, and 1,2,3-propanetrithiol with one or more kinds among ethylene oxide, propylene oxide, butylene oxide, styrene oxide, epichlorohydrin, and tetrahydrofuran.

Examples of the polycarbonate polyol include, but are not limited to, compounds obtained by the reaction of glycols such as 1,4-butanediol, 1,6-hexanediol, and diethylene glycol, with diphenyl carbonate and phosgene.

Among the active hydrogen-containing compounds, the second low-molecular weight compound is a compound which has at least two active hydrogens per one molecule and has a number average molecular weight of less than 300, and examples thereof include, but are not limited to, glycol components used as raw materials of the polyester polyol; polyhydroxy compounds such as glycerin, trimethylolethane, trimethylolpropane, sorbitol, and pentaerythritol; and amine compounds such as ethylenediamine, 1,6-hexamethylenediamine, piperazine, 2,5-dimethylpiperazine, isophoronediamine, 4,4'-dicyclohexylmethanediamine, 3,3'-dimethyl-4,4'-dicyclohexylmethanediamine, 1,4-cyclohexanediamine, 1,2-propanediamine, hydazine, diethylenetriamine, and triethylenetetramine.

The second urethane prepolymer may further include a hydrophilic group. The term "hydrophilic group," as used herein, refers to an anionic group (for example, carboxyl group, sulfonic acid group, or phosphoric acid group), or a cationic group (for example, tertiary amino group, or quaternary amino group), or a nonionic hydrophilic group (for example, a group composed of a repeating unit of ethylene oxide, or a group composed of a repeating unit of ethylene oxide and a repeating unit of another alkylene oxide).

Among hydrophilic groups, a nonionic hydrophilic group having a repeating unit of ethylene oxide may, for example, be preferred because the finally obtained polyurethane emulsion has excellent compatibility with other kinds of emulsions. Introduction of a carboxyl group and/or a sulfonic acid group is effective to make the particle size finer.

The ionic group refers to a functional group capable of serving as a hydrophilic ionic group which contributes to self dispersibility in water by neutralization, providing colloidal stability during the processing against agglomeration; stability during shipping, storage and formulation with other additives. These hydrophilic groups could also introduce application specific properties such as adhesion.

When the ionic group is an anionic group, the neutralizer used for neutralization includes, for example, nonvolatile bases such as sodium hydroxide and potassium hydroxide; and volatile bases such as tertiary amines (for example trimethylamine, triethylamine, dimethylethanolamine, methyldiethanolamine, and triethanolamine) and ammonia can be used.

When the ionic group is a cationic group, usable neutralizer includes, for example, inorganic acids such as hydrochloric acid, sulfuric acid, and nitric acid; and organic acids such as formic acid and acetic acid.

Neutralization may be conducted before, during or after the polymerization of the compound having an ionic group. Alternatively, neutralization may be conducted during or after the polyurethane polymerization reaction.

To introduce a hydrophilic group in the second polyurethane prepolymer, a compound, which has at least one active hydrogen atom per one molecule and also has the above hydrophilic group, may be used as an active hydrogen-containing compound. Examples of the compound, which has at least one active hydrogen atom per one molecule and also has the above hydrophilic group, include:

(1) sulfonic acid group-containing compounds such as 2-oxyethanesulfonic acid, phenolsulfonic acid, sulfobenzoic acid, sulfosuccinic acid, 5-sulfoisophthalic acid, sulfanilic acid, 1,3-phenylenediamine-4,6-disulfonic acid, and 2,4-diaminotoluene-5-sulfonic acid, and derivatives thereof, or polyester polyols obtained by copolymerizing them;

(2) carboxylic acid-containing compounds such as 2,2-dimethylolpropionic acid, 2,2-dimethylolbutyric acid, 2,2-dimethylolvaleric acid, dioxymaleic acid, 2,6-dioxybenzoic acid, and 3,4-diaminobenzoic acid, and derivatives thereof, or polyester polyols obtained by copolymerizing them; tertiary amino group-containing compounds such as methyldiethanolamine, butyldiethanolamine, and alkyldiisopropanolamine, and derivatives thereof, or polyester polyol or polyether polyol obtained by copolymerizing them;

(3) reaction products of the above tertiary amino group-containing compounds, or derivatives thereof, or polyester polyols or polyether polyols obtained by copolymerizing them, with quaternizing agents such as methyl chloride, methyl bromide, dimethylsulfuric acid, diethylsulfuric acid, benzyl chloride, benzyl bromide, ethylenechlorohydrin, ethylenebromohydrin, epichlorohydrin, and bromobutane;

(4) nonionic group-containing compounds such as polyoxyethylene glycol or polyoxyethylene-polyoxypropylene copolymer glycol, which has at least 30% by weight of a repeating unit of ethylene oxide and at least one active hydrogen in the polymer and also has a molecular weight of 300 to 20,000, polyoxyethylene-polyoxybutylene copolymer glycol, polyoxyethylene-polyoxyalkylene copolymer glycol, and monoalkyl ether thereof, or polyesterpolyether polyols obtained by copolymerizing them; and

(5) combinations thereof.

The term "low solid content polyurethane dispersion," as used herein, refers to a polyurethane dispersion that contains less than 60 percent by weight of polyurethane particles based on the total weight of the polyurethane dispersion. All individual values and subranges in the range of less than 60 weight percent are included herein and disclosed herein; for example, less than 50 weight percent; or in the alternative, less than 40 weight percent. The low solid content polyurethane dispersion may have a volume average particle size diameter; for example, the low solid content polyurethane dispersion may have a volume average particle size diameter in the range of 0.04 to 5.0 micron. All individual values and subranges from 0.04 to 5.0 micron are included herein and disclosed herein; for example, the low solid content polyurethane dispersion may have a volume average particle size diameter in the range of 0.07 to 1.0 micron; or in the alternative, the low solid content polyurethane dispersion may have a volume average particle size diameter in the range of 0.08 to 0.2 micron. The low solid content polyurethane dispersion may have any polydispersity; for example, the low solid content polyurethane dispersion may have a polydispersity in the range of 1 to 20. All individual values and subranges from 1 to 20 are included herein and disclosed herein; for example, the low solid content polyurethane dispersion may have a polydispersity in the range of 1 to 10; or in the alternative, the low solid content polyurethane dispersion may have polydispersity in the range of 1 to 2. Any conventional method may be employed to make such low solid content polyurethane dispersion.

The term "seed latex," as used herein refers to dispersions, suspensions, emulsions, or latexes of polyolefins such polyethylene and polypropylene, epoxies, silicon, styrene, acrylate, butadiene, isoprene, vinyl acetate, or copolymers thereof. The term "seed latex," as used herein, may, for example, further refer to emulsions of polyvinyl acetate, polyethylene-vinyl acetate, polyacrylic, or polyacrylic-styrenic; latexes of polystyrene-butadiene, polyacrylonitrile-butadiene, or polyacrylic-butadiene; aqueous dispersions of polyethylene and polyolefin ionomers; or various aqueous dispersions of polyurethane, polyester, polyamide, epoxy resin, copolymers thereof, or alloys thereof. The seed latex may have any volume average particle size diameter; for example, the seed latex may have a volume average particle size diameter in the range of 0.05 to 5.0 micron. All individual values and subranges from 0.05 to 5.0 micron are included herein and disclosed herein; for example, the seed latex may have a volume average particle size diameter in the range of 0.07 to 1.0 micron; or in the alternative, the seed latex may have a volume average particle size diameter in the range of 0.08 to 0.2 micron. The seed latex may have a bimodal or multimodal particle size distribution. The seed latex may have any polydispersity; for example, the seed latex may have a polydispersity in the range of 1 to 20. All individual values and subranges from 1 to 20 are included herein and disclosed herein; for example, seed latex may have a polydispersity in the range of 1 to 10; or in the alternative, the seed latex may have a polydispersity in the range of to 2. Any conventional method may be employed to make such dispersions, suspension, emulsions, or latexes. Such conventional methods include, but are not limited to, emulsion polymerization, suspension polymerization, micro-emulsion, mini-emulsion, or dispersion polymerization.

The term "surfactants," as used herein, refers to any compound that reduces surface tension when dissolved in water or water solutions, or that reduces interfacial tension between two liquids, or between a liquid and a solid. Surfactants useful for preparing a stable dispersion in the practice of the present invention may be cationic surfactants, anionic surfactants, zwitterionic, or a non-ionic surfactants. Examples of anionic surfactants include, but are not limited to, sulfonates, carboxylates, and phosphates. Examples of cationic surfactants include, but are not limited to, quaternary amines. Examples of non-ionic surfactants include, but are not limited to, block copolymers containing ethylene oxide and silicone surfactants, such as ethoxylated alcohol, ethoxylated fatty acid, sorbitan derivative, lanolin derivative, ethoxylated nonyl phenol or alkoxylated polysiloxane. Furthermore, the surfactants can be either external surfactants or internal surfactants. External surfactants are surfactants which do not become chemically reacted into the polymer during dispersion preparation. Examples of external surfactants useful herein include, but are not limited to, salts of dodecyl benzene sulfonic acid, and lauryl sulfonic acid salt. Internal surfactants are surfactants which do become chemically reacted into the polymer during dispersion preparation. Examples of an internal surfactant useful herein include, but are not limited to, 2,2-dimethylol propionic acid and its salts, quaternized ammonium salts, and hydrophilic species, such polyethylene oxide polyols.

Polyurethane prepolymers are typically chain extended via a chain extender. Any chain extender known to be useful to those of ordinary skill in the art of preparing polyurethanes can be used with the present invention. Such chain extenders typically have a molecular weight of 30 to 500 and have at least two active hydrogen containing groups. Polyamines are a preferred class of chain extenders. Other materials, particularly water, can function to extend chain length and so are chain extenders for purposes of the present invention. It is particularly preferred that the chain extender is water or a mixture of water and an amine such as, for example, aminated polypropylene glycols such as Jeffamine D-400 from Huntsman Chemical Company, amino ethyl piperazine, 2-methyl piperazine, 1,5-diamino-3-methyl-pentane, isophorone diamine, ethylene diamine, diethylene triamine, triethylene tetramine, triethylene pentamine, ethanol amine, lysine in any of its stereoisomeric forms and salts thereof, hexane diamine, hydrazine and piperazine. In the practice of the present invention, the chain extender may be used as a solution of chain extender in water.

Examples of the chain extender used in the present invention include water; diamines such as ethylenediamine, 1,2-propanediamine, 1,6-hexamethylenediamine, piperazine, 2-methylpiperazine, 2,5-dimethylpiperazine, isophoronediamine, 4,4'-dicyclohexylmethanediamine, 3,3'-dimethyl-4,4'-dicyclohexylmethanediamine, 1,2-cyclohexanediamine, 1,4-cyclohexanediamine, aminoethylethanolamine, aminopropylethanolamine, aminohexylethanolamine, aminoethylpropanolamine, aminopropylpropanolamine, and aminohexylpropanolamine; polyamines such as diethylenetriamine, dipropylenetriamine, and triethylenetetramine; hydrazines; acid hydrazides. These chain extenders can be used alone or in combination.

The ultra high-said content polyurethane dispersion maybe produced via continues method; or in the alternative, it maybe produced via batch process.

In production of the ultra high-said content polyurethane dispersion, the method for producing such ultra high-solid content polyurethane dispersion suitable for sealant applications includes the following steps: (1) providing a first stream, wherein the first stream comprising a first polyurethane prepolymer or a first polyurethane prepolymer emulsion; (2) providing a second stream, wherein the second stream being a media phase selected from the group consisting of a second polyurethane prepolymer, a second polyurethane prepolymer emulsion, a polyurethane dispersion, a seed latex emulsion, or combinations thereof; (3) continuously merging the first stream with the second stream optionally in the presence of a chain extender; and (4) thereby forming a polyurethane dispersion having a solid content of at least 65 percent by weight of solid contents, based on the total weight of the ultra-high solid content polyurethane dispersion, and a viscosity in the range of less than 5000 cps at 20 rpm at 21° C using spindle #4 with Brookfield viscometer.

In an alternative production of the ultra high-said content polyurethane dispersion, the method for producing such high-solid content polyurethane dispersion suitable for sealant applications includes the following steps: (1) providing a first stream, wherein the first stream being a first polyurethane prepolymer or a the polyurethane prepolymer stream; (2) providing a second stream, wherein the second stream being a media phase; (3) continuously merging the first and the second stream together optionally in the presence of a surfactant at a temperature in the range of 10°C to 70°C, wherein the ratio of the first stream to the second stream being in the range of 0.1 to 0.6, and wherein the surfactant is optionally present in a concentration range of 0.1 to 3.0 percent, based on the total weight of the first stream, the second stream, and the surfactant; (4) thereby forming the ultra-high solid content polyurethane dispersion, wherein the ultra-high solid content polyurethane dispersion having at least a solid content of at least 65 percent by weight of solid contents, based on the total weight of the ultra-high solid content polyurethane dispersion, and a viscosity in the range of less than 5000 cps at 20 rpm at 21° C using spindle #4 with Brookfield viscometer.

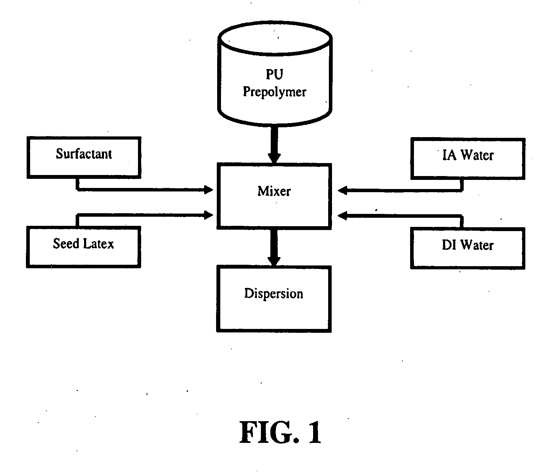

Referring to Fig. 1, a first stream comprising a first polyurethane prepolymer, optionally a surfactant, and optionally water is fed into a mixer, for example an OAKS Mixer or an IKA Mixer or those mixers disclosed in the U.S. Patent Application Serial No. 60/875.657 tiled on December 19, 2006, while a second stream comprising a media phase selected from the group consisting of a second polyurethane prepolymer, a second polyurethane prepolymer emulsion, a polyurethane dispersion, a seed latex emulsion, and/or combinations thereof is fed into the mixer. First stream and second stream are merged together optionally in the presence of a chain extender, dilution water, and/or combinations thereof. The first stream is emulsified into the second stream via high shear rate mixing thereby forming the ultra-high solid content polyurethane dispersion suitable for sealant applications of the instant invention.

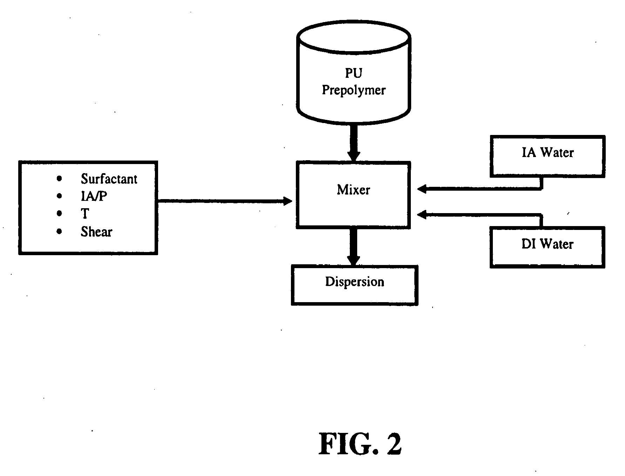

Referring to Fig. 2 a first stream comprising a first polyurethane prepolymer, a surfactant, and water is fed into a mixer, for example an OAKS mixer or an IKA mixer or those mixers disclosed in the U.S. Patent Application Serial No.

60/875.657 filed on December 19, 2006, at a temperature in the range of 10°C to 70°C, a first polyurethane prepolymer to water weight ratio in the range of about 0.3 to 0.5. Sufficient shear rate is provided to facilitate the formation of the ultra-high solid content polyurethane dispersion of the instant invention. Optionally a chain extender, dilution water, and/or combinations thereof may further be fed into the mixer, and merged with the first stream thereby forming the ultra-high solid content polyurethane dispersion suitable for sealant applications of the instant invention.

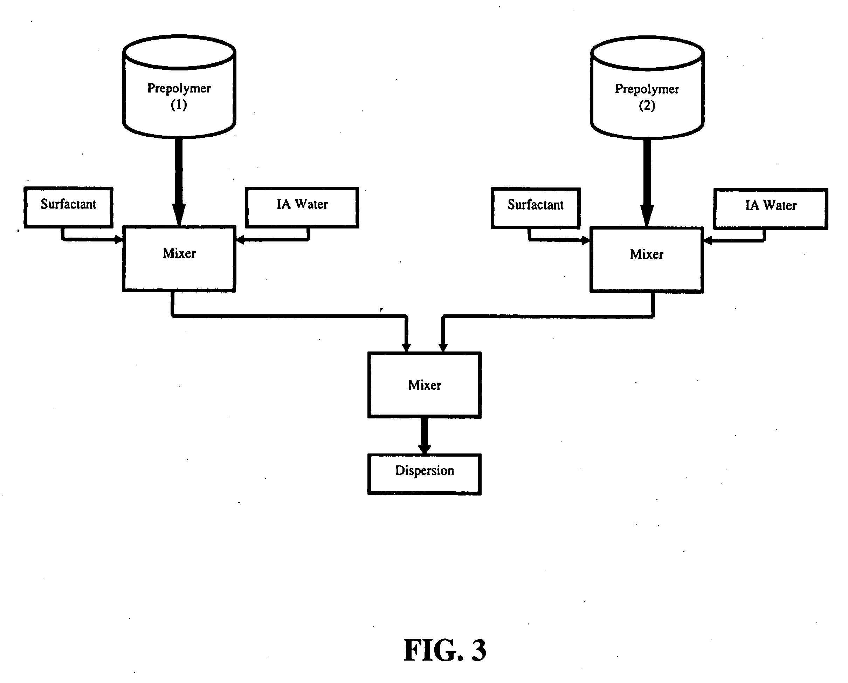

Referring to Fig. 3, a first polyurethane prepolymer, optionally a surfactant, and optionally water are fed into a first mixer, for example an OAKS Mixer or an IKA Mixer or those mixers disclosed in the U.S. Patent Application Serial No. 60/875.657 filed on December 19, 2006, thereby forming a first stream, that is first polyurethane prepolymer or a first polyurethane prepolymer emulsion. A second polyurethane prepolymer, optionally a surfactant, and optionally water are fed into a second mixer, for example an OAKS Mixer or an IKA Mixer or those mixers disclosed in the U.S. Patent Application Serial No. 60/875.657 filed on December 19, 2006,

thereby forming a second stream, that is a second polyurethane prepolymer or a second polyurethane prepolymer emulsion. The first stream and second streams are fed into a third mixer, for example an OAKS Mixer or an IKA Mixer or those mixers disclosed in the U.S. Patent Application Serial No. 60/875.657 filed on December 19, 2006, and merged together optionally in the presence of a chain extender, dilution water, or combinations thereof thereby forming the ultra-high solid content polyurethane dispersion suitable for sealant applications of the instant invention.

In production, the sealant composition may be produced via any number of mixing devices. One such device may be a vertical mixing vessel with dual shafts, first shaft comprising a sweep blade and the second shaft comprising a high speed disperser. An ultra-high solid polyurethane dispersion may be added into the vessel. At this time the sweep blade may be started, and subsequently surfactant, thickener, dispersant, freeze-thaw agents, and additive such as a propylene glycol, and plasticizer may be added to the vessel. Once enough material has been added to the vessel such that the high speed disperser blade is covered, then this blade may be started. To this mixture pigments such as titanium dioxide and fillers such as calcium carbonate may be added while maintaining the sweep blade and high speed disperser turned on. Finally, a neutralizing agent such as ammonia may be added to the vessel. Mixing should continue at, for example, 25 °C. until the mixture is thoroughly mixed. The mixture may or may not be vacuumed. Vacuuming of the mixture can occur in any suitable container either in the mixer or outside of the mixer.

### Examples

The present invention will now be explained in further detail by showing Inventive Examples, and Comparative Examples, but the scope of the present invention is not, of course, limited to these Examples.

### Polyurethane Prepolymer Synthesis

87 grams of Acclaim™ 8200 polyol (a polyoxypropoylene diol having a molecular weight of 8200 g/mole, commercially available from Bayer), 10 grams of Isophorone diisocyanate (IPDI), and 3 grams of Carbowax 1000 (Polyethylene oxide having a molecular weight of 1000 g/mole, commercially available from the Dow Chemical Company) were admixed in the presence of 0.01 weight percent tin catalyst in a stirred reactor at 80 °C. under mild stirring conditions for 4 hours. The resulting polyurethane prepolymer comprised 2.8 weight percent NCO.

### Seed Latex Formulations

Two acrylate latexes having different amounts of solids were employed to prepare the inventive and comparative examples. The first acrylate Latex was UCAR 163S comprising 56.2 percent by weight of solid based on the total weight of the acrylate latex. The second acrylate latex was UCAR 169S comprising 61.3 percent by weight of solid based on the total weight of the acrylate latex.

### Seed Polyurethane Dispersion Synthesis

The prepolymer prepared above was emulsified using a high shear mixer continuously. In this process, 60 g of prepolymer was fed into a high shear mixer where it was blended with an aqueous solution of anionic surfactant, that is sodium dodecylbenzene sulfonate (2 weight percent, based on the weight of the prepolymer). The pre-emulsion was subsequently chain extended with an aqueous solution of ethylene diamine chain extender at 98 percent stoichiometric ratio to NCO level. The final seed polyurethane dispersion comprised 52 percent by weight of solids, excluding any fillers, and an average particle size of approximately 0.7 micron.

**Preparation of the Ultra-High Solid Polyurethane/Acrylate Dispersion (PU/Acrylate Hybrid Dispersion)**

40 grams of the above-described polyurethane prepolymer was fed into a high shear mixing device where it was emulsified into 100 grams of a seed acrylate latex, that is UCAR 169S. The resulting ultra-high solid content polyurethane/acrylic hybrid dispersion had a bimodal particle size and a very broad particle size distribution. It comprised approximately 73.5 percent by weight of solid particles, excluding the weight of any filler, based on the total weight of the dispersion. The ultra-high solid content polyurethane/acrylic hybrid dispersion had a viscosity of 2720 cps at 20 rpm at 21° C using #4 spindle, and a viscosity of 1852 cps at 50 rpm at 21° C using #4 spindle with Brookfield viscometer. The final weight ratio of urethane to acrylate was 0.39.

**Preparation of the Ultra-High Solid Polyurethane/Polyurethane Hybrid Dispersion (PU/PU Hybrid Dispersion)**

The polyurethane prepolymer was prepared using the same ingredients as described above, but the weight ratios were changed such that a prepolymer with 2.0 percent NCO was obtained. This polyurethane prepolymer was emulsified using a high shear continuous dispersion process into the seed polyurethane dispersion, as described above. 55 grams of the above-described polyurethane prepolymer was fed into a high shear mixing device where it was emulsified into 100 grams of a seed polyurethane dispersion. The resulting ultra-high solid content polyurethane/polyurethane hybrid dispersion comprised approximately 69 percent by weight of solid particles, excluding the weight of any filler, based on the total weight of the dispersion. The ultra-high solid content polyurethane/acrylic hybrid dispersion had a viscosity of less than 3000 cps at 20 rpm at 21° C using #4 spindle.

**Inventive Examples 1-4**

Inventive Examples 1-4 were prepared according to the following procedures. The formulation components listed in Table I were admixed at room temperature via a vertical mixing vessel with dual shafts, first shaft comprising a sweep blade and the second shaft comprising a high speed disperser. The resultant sealant compositions were tested for their properties, and those properties and results are shown in Table II.

**Comparative Examples A-B**

Comparative Examples A-B were prepared according to the following procedures. The formulation components listed in Table I were admixed at room temperature via a vertical mixing vessel with dual shafts, first shaft comprising a sweep blade and the second shaft comprising a high speed disperser. The resultant sealant compositions were tested for their properties, and those properties and results are shown in Table II.

**Test Methods**

Test methods include the following:

Volume average particle size diameter and particle size distribution were measured via Dynamic Light Scattering (Coulter LS 230).
Viscosity was measured via Brookfield viscometer.
Isocyanate content (%NCO) was determined using a Meter Toledo DL58.
Low temperature flexibility (joint movement flexibility) was determined according to ASTM C-793, Standard Test Method for Effects of Accelerated Weathering on Elastomeric Joint Sealants.

Elastic recovery and elongation flexibility was determined according to the following procedure. Thin films were prepared on Teflon surface using a 20 mil draw down device. The films were dried for 7 days at room temperature before testing. The ultra-high solid polyurethane dispersions and hybrid dispersions were poured into a Petri dish with PTFE liner and allowed to dry at ambient condition for 7 day. The resultant films had a thickness in the range of 10 to 20 mils. Microtensile specimens (ASTM-D 1708) were cut from the films for tensile testing using an Instron 5581 mechanical testing system. For tensile stress-strain characterization, the specimens were loaded at 100%/min (22.25mm/min) until break. Stress-strain curves, secant modulus at 100%, elongation at break, and tensile strength were recorded. At least three specimens were used per each sample. For recovery characterization, the specimens were drawn to 100% and then returned to 0%, which is referred to as one cycle. The cycle was repeated 10 times continuously for one test. Both tensile and recovery tests were performed at room temperature, 0 °C., and -25 °C. The 10th cycle recovery was calculated to be 100% minus the initial strain at the beginning of the 10th cycle. The low temperature test was performed within a BEMCO Environment Chamber using a WATLOW 942 temperature controller with liquid nitrogen as the coolant. An additional thermal couple was placed close to the specimen to monitor the actual temperature.

Shrinkage was determined according to the following procedure. A glass mould with a slit of 2x4x3/8 inches (LxWxH) is filled with sealants (clear or formulated). This is then cured at room temperature for 21 days. The decrease in the height (3/8) of the sealant is measured at the middle point. The change is then used in determination of % shrinkage relative the original height.

**Table I**

| | Inventive Example 1 (Clear) | Inventive Example 2 (Clear) | Comparative Example A (Clear) | Inventive Example 3 (Pigmented) | Inventive Example 4 (Pigmented) | Comparative Example B (Pigmented) |
|---|---|---|---|---|---|---|
| Ultra-High Solid Polyurethane Dispersion | PU/PU Hybrid Dispersion (94.5 W%) | PU/Acrylate Hybrid Dispersion (94.5W%) | UCAR 163S (94.5 W%) | PU/PU Hybrid Dispersion (53.5 W%) | PU/Acrylate Hybrid Dispersion (53.5 W%) | UCAR 163S (53.5 W%) |
| Triton X-405 | 0.6 wt% | 0.6 wt% | 0.6 wt% | 0.42 wt% | 0.42 wt% | 0.42 wt% |
| UCAR Polyphobe 106HE | 3.6 wt% | 3.6 wt% | 3.6 wt% | --- | --- | --- |
| Tamol 850 | --- | --- | --- | 0.4 wt% | 0.4 wt% | 0.4 wt% |
| Ti-Pure R-902 | --- | --- | --- | 1.3 wt% | 1.3 wt% | 1.3 wt% |
| Drikalite | --- | --- | --- | 42.9 wt% | 42.9 wt% | 42.9 wt% |
| Propylene Glycol | 0.8 wt% | 0.8 wt% | 0.8 wt% | 0.8 wt% | 0.8 wt% | 0.8 wt% |
| Jayflex 77 | --- | ---- | ---- | --- | --- | --- |
| Cellosize QP-100MH | --- | --- | --- | 0.6 wt% | 0.6 wt% | 0.6 wt% |
| Aqueous Ammonia | 0.44 wt% | 0.44 wt% | 0.44 wt% | 0.06 wt% | 0.06 wt% | 0.06 wt% |

**Table II**

| | Inventive Example 1 (Clear) | Inventive Example 2 (Clear) | Comparative Example A (Clear) | Inventive Example 3 (Pigmented) | Inventive Example 4 (Pigmented) | Comparative Example B (Pigmented) |
|---|---|---|---|---|---|---|
| Solid content of the Ultra-High Solid Polyurethane Dispersion | 69 | 74 | 56 | 69 | 74 | 56 |
| Elongation Flexibility (%) @ -25 °C. | 1300 | 650 | brittle | 400 | --- | 220 |
| Recovery (%) @ -25 °C. | 84 | 90 | 40 | --- | --- | --- |
| Joint Movement Flexibility -25 °C. | Pass | Pass | Fail | Pass | Pass | Fail |

(continued)

| | Inventive Example 1 (Clear) | Inventive Example 2 (Clear) | Comparative Example A (Clear) | Inventive Example 3 (Pigmented) | Inventive Example 4 (Pigmented) | Comparative Example B (Pigmented) |
|---|---|---|---|---|---|---|
| Shrinkage (%) | 18 | 17 | 28 | --- | --- | --- |

**Claims**

1. A sealant composition comprising:

   an aqueous ultra-high solid polyurethane dispersion comprising:

   a first component, wherein said first component comprising a first polyurethane prepolymer or a first polyurethane prepolymer emulsion;
   a second component, wherein said second component comprising a media phase selected from the group consisting of a second polyurethane prepolymer emulsion, a low solid content polyurethane dispersion, a seed latex, and combinations thereof; and
   a chain extender;
   wherein said ultra-high solid polyurethane dispersion has at least a solid content of at least 65 percent by weight of solid content, excluding the weight of any filler, based on the total weight of said ultra-high solid polyurethane dispersion, and a viscosity of less than 5000 cps at 20 rpm at 21° C using spindle #4 with Brookfield viscometer.

2. The sealant composition according to Claim 1, wherein said sealant composition further comprises one or more surfactants, one or more dispersants, one or more thickeners, one or more pigments, one or more fillers, one or more freeze-thaw agent, one or more neutralizing agents, one or more plasticizers, and/or combinations thereof.

3. The sealant composition according to Claim 2, wherein said sealant composition comprises 25 to less than 100 percent by weight of said ultra-high solid polyurethane dispersion, based on the weight of the sealant composition.

4. The sealant composition according to Claim 2, wherein said sealant composition comprises 0.1 to 5 percent by weight of said one or more surfactants, or wherein said sealant composition comprises 0.1 to 5 percent by weight of said one or more dispersants, or wherein said sealant composition comprises 0.1 to 5 percent by weight of said one or more thickeners, or wherein said sealant composition comprises 0 to less than 10 percent by weight of said one or more pigments, or wherein said sealant composition comprises 0 to 75 percent by weight of said one or more fillers, or wherein said sealant composition comprises 0.1 to 2 percent by weight of said one or more freeze-thaw agents, or wherein said sealant composition comprises 0.1 to 1 percent by weight of said one or more neutralizing agents, or wherein said sealant composition comprises 0 to 12 percent by weight of said one or more plasticizers.

5. The sealant composition according to Claim 2, wherein said sealant composition further comprises 0.1 to less than 10 percent by weight of one or more pigments, and wherein said sealant composition has an elongation flexibility of at least 650 percent at -25 °C.

6. The sealant composition according to Claim 2, wherein said sealant composition being substantially free of any pigments, and wherein said sealant composition has an elongation flexibility of at least 400 percent at -25 °C.

7. The sealant composition according to Claim 2, wherein said sealant composition has an elastic recovery of 50 percent or greater at -25 °C.

8. The sealant composition according to Claim 2, wherein said sealant composition has a shrinkage of less than 20 percent.

9. The sealant composition according to Claim 1, wherein said first component comprises one or more first polymer resins and said second component comprises one or more second polymer resins, and wherein said first polymer resin and said second polymer resin have a volume average particle size ratio in the range of 1:5 to 1:2.

**10.** The sealant composition according to Claim 9, wherein said ultra-high solid content polyurethane, dispersion comprises 20 to 40 percent by weight of said one or more first polymer resins having a particle size in the range of 0.04 micron to 5.0 micron, and 60 to 80 percent by weight of said one or more second polymer resins having a particle size in the range of 0.05 micron to 5.0 micron, based on the total weight of said one or more first polymer resins and said one or more second polymer resins.

**11.** The sealant composition according to Claim 1, wherein said seed latex is selected from the group consisting of a dispersion, emulsion, or latex of olefins, epoxies, silicon, styrene, acrylate, butadiene, isoprene, vinyl acetate, copolymers thereof, and blends thereof.

**12.** The sealant composition according to Claim 1, wherein said seed latex is an oil phase emulsified in water.

**13.** The sealant composition according to Claim 1, wherein said first or second polyurethane prepolymer is a reaction product of at least one polyisocyanate and at least one polyol.

**14.** The sealant composition according to Claim 13, wherein said polyisocyanate is aromatic or aliphatic, and wherein said polyol is selected from the group consisting of polyether, polyester, polycarbonate, natural seed oil polyol, and combinations thereof.

**15.** The sealant composition according to Claim 13, wherein said first or second polyurethane prepolymer is isocyanate terminated or hydroxyl terminated.

**16.** A sealant composition comprising:

an aqueous ultra-high solid polyurethane dispersion comprising:

a first component, wherein said first component comprising a first polyurethane prepolymer emulsion;
a second component, wherein said second component comprising a
dispersion, emulsion, or latex of an acrylate; and
a chain extender;
wherein said ultra-high solid polyurethane dispersion has at least a solid content of at least 65 percent by weight of solid content, excluding the weight of any filler, based on the total weight of said ultra-high solid polyurethane dispersion, and a viscosity of less than 5000 cps at 20 rpm at 21° C using spindle #4 with Brookfield viscometer optionally one or more surfactants, optionally one or more dispersants, optionally one or more thickeners, optionally one or more pigments, optionally one or more fillers, optionally one or more freeze-thaw agent, optionally one or more neutralizing agents, optionally one or more plasticizers, and/or combinations thereof.

**Patentansprüche**

**1.** Dichtungsmittel-Zusammensetzung umfassend:

eine wässrige ultrahochfeste Polyurethandispersion umfassend:

eine erste Komponente, wobei die erste Komponente ein erstes Polyurethan-Präpolymer oder eine erste Polyurethan-Präpolymer-Emulsion umfasst;
eine zweite Komponente, wobei die zweite Komponente eine Medienphase umfasst, die ausgewählt ist aus der Gruppe bestehend aus einer zweiten Polyurethan-Präpolymer-Emulsion, einer Polyurethandispersion mit niedrigem Feststoffgehalt, einem Keimlatex, und Kombinationen davon; und
einen Kettenverlängerer;
wobei die ultrahochfeste Polyurethandispersion wenigstens einen Feststoffgehalt von wenigstens 65 Gewichtsprozent an Feststoffgehalt, unter Ausschluss des Gewichts eines beliebigen Füllstoffs, basierend auf dem Gesamtgewicht der ultrahochfesten Polyurethandispersion, und eine Viskosität von weniger als 5000 cps bei 20 upm bei 21 °C unter Verwendung von Spindel #4 mit einem Brookfield-Viskometer aufweist.

**2.** Dichtungsmittel-Zusammensetzung nach Anspruch 1, wobei die Dichtungsmittel-Zusammensetzung weiter ein oder mehrere Tenside, ein oder mehrere Dispergiermittel, ein oder mehrere Verdickungsmittel, ein oder mehrere Pigmente, ein oder mehrere Füllstoffe, ein oder mehrere Frier-Tau-Mittel, ein oder mehrere Neutralisierungsmittel, ein oder mehrere Weichmacher, und/oder Kombinationen davon umfasst.

3.  Dichtungsmittel-Zusammensetzung nach Anspruch 2, wobei die Dichtungsmittel-Zusammensetzung 25 bis weniger als 100 Gewichtsprozent der ultrahochfesten Polyurethandispersion, basierend auf dem Gewicht der Dichtungsmittel-Zusammensetzung, umfasst.

4.  Dichtungsmittel-Zusammensetzung nach Anspruch 2, wobei die Dichtungsmittel-Zusammensetzung 0,1 bis 5 Gewichtsprozent der ein oder mehreren Tenside umfasst, oder wobei die Dichtungsmittel-Zusammensetzung 0,1 bis 5 Gewichtsprozent der ein oder mehreren Dispergiermittel umfasst, oder wobei die Dichtungsmittel-Zusammensetzung 0,1 bis 5 Gewichtsprozent der ein oder mehreren Verdickungsmittel umfasst, oder wobei die Dichtungsmittel-Zusammensetzung 0 bis weniger als 10 Gewichtsprozent der ein oder mehreren Pigmente umfasst, oder wobei die Dichtungsmittel-Zusammensetzung 0 bis 75 Gewichtsprozent der ein oder mehreren Füllstoffe umfasst, oder wobei die Dichtungsmittel-Zusammensetzung 0,1 bis 2 Gewichtsprozent der ein oder mehreren Frier-Tau-Mittel umfasst, oder wobei die Dichtungsmittel-Zusammensetzung 0,1 bis 1 Gewichtsprozent der ein oder mehreren Neutralisierungsmittel umfasst, oder wobei die Dichtungsmittel-Zusammensetzung 0 bis 12 Gewichtsprozent der ein oder mehreren Weichmacher umfasst.

5.  Dichtungsmittel-Zusammensetzung nach Anspruch 2, wobei die Dichtungsmittel-Zusammensetzung weiter 0,1 bis weniger als 10 Gewichtsprozent eines oder mehrerer Pigmente umfasst, und wobei die Dichtungsmittel-Zusammensetzung eine Elongations-Flexibilität von wenigstens 650 Prozent bei -25°C aufweist.

6.  Dichtungsmittel-Zusammensetzung nach Anspruch 2, wobei die Dichtungsmittel-Zusammensetzung im Wesentlichen frei von beliebigen Pigmenten ist, und wobei die Dichtungsmittel-Zusammensetzung eine Elongations-Flexibilität von wenigstens 400 Prozent bei -25°C aufweist.

7.  Dichtungsmittel-Zusammensetzung nach Anspruch 2, wobei die Dichtungsmittel-Zusammensetzung eine Elastizitätsrückgewinnung von 50 Prozent oder größer bei -25°C aufweist.

8.  Dichtungsmittel-Zusammensetzung nach Anspruch 2, wobei die Dichtungsmittel-Zusammensetzung eine Schrumpfung von weniger als 20 Prozent aufweist.

9.  Dichtungsmittel-Zusammensetzung nach Anspruch 1, wobei die erste Komponente ein oder mehrere erste Polymerharze umfasst und die zweite Komponente ein oder mehrere zweite Polymerharze umfasst, und wobei das erste Polymerharz und das zweite Polymerharz ein durchschnittliches Volumenpartikelgrößenverhältnis im Bereich von 1:5 bis 1:2 aufweisen.

10. Dichtungsmittel-Zusammensetzung nach Anspruch 9, wobei die Polyurethandispersion mit ultra-hohem Feststoffgehalt 20 bis 40 Gewichtsprozent der ein oder mehreren ersten Polymerharze, die eine Partikelgröße im Bereich von 0,04 Mikrometer bis 5,0 Mikrometer aufweisen, und 60 bis 80 Gewichtsprozent der ein oder mehreren zweiten Polymerharze, die eine Partikelgröße im Bereich von 0,05 Mikrometer bis 5,0 Mikrometer aufweisen, basierend auf dem Gesamtgewicht der ein oder mehreren ersten Polymerharze und der ein oder mehreren zweiten Polymerharze, umfasst.

11. Dichtungsmittel-Zusammensetzung nach Anspruch 1, wobei der Keimlatex ausgewählt ist aus der Gruppe bestehend aus einer Dispersion, Emulsion oder Latex von Olefinen, Epoxiden, Silikon, Styrol, Acrylat, Butadien, Isopren, Vinylacetat, Copolymeren davon, und Mischungen davon.

12. Dichtungsmittel-Zusammensetzung nach Anspruch 1, wobei der Keimlatex eine in Wasser emulgierte Ölphase ist.

13. Dichtungsmittel-Zusammensetzung nach Anspruch 1, wobei das erste oder zweite Polyurethan-Präpolymer ein Reaktionsprodukt von wenigstens einem Polyisocyanat und wenigstens einem Polyol ist.

14. Dichtungsmittel-Zusammensetzung nach Anspruch 13, wobei das Polyisocyanat aromatisch oder aliphatisch ist, und wobei das Polyol ausgewählt ist aus der Gruppe bestehend aus Polyether, Polyester, Polycarbonat, Polyol aus natürlichem Samenöl, und Kombinationen davon.

15. Dichtungsmittel-Zusammensetzung nach Anspruch 13, wobei das erste oder zweite Polyurethan-Präpolymer isocyanat-terminiert oder hydroxyl-terminiert ist.

**16.** Dichtungsmittel-Zusammensetzung umfassend:

eine wässrige ultrahochfeste Polyurethandispersion umfassend:

eine erste Komponente, wobei die erste Komponente eine erste Polyurethan-Präpolymer-Emulsion umfasst;

eine zweite Komponente, wobei die zweite Komponente eine Dispersion, Emulsion oder Latex eines Acrylats umfasst; und

einen Kettenverlängerer;

wobei die ultrahochfeste Polyurethandispersion wenigstens einen Feststoffgehalt von wenigstens 65 Gewichtsprozent an Feststoffgehalt, unter Ausschluss des Gewichts eines beliebigen Füllstoffs, basierend auf dem Gesamtgewicht der ultrahochfesten Polyurethandispersion, und eine Viskosität von weniger als 5000 cps bei 20 upm bei 21 °C unter Verwendung von Spindel #4 mit einem Brookfield-Viskometer aufweist;

gegebenenfalls ein oder mehrere Tenside, gegebenenfalls ein oder mehrere Dispergiermittel, gegebenenfalls ein oder mehrere Verdickungsmittel, gegebenenfalls ein oder mehrere Pigmente, gegebenenfalls ein oder mehrere Füllstoffe, gegebenenfalls ein oder mehrere Frier-Tau-Mittel, gegebenenfalls ein oder mehrere Neutralisierungsmittel, gegebenenfalls ein oder mehrere Weichmacher, und/oder Kombinationen davon.

## Revendications

**1.** Composition de matériau d'étanchéité, comprenant une dispersion aqueuse de polyuréthane à teneur en solides ultra-haute, laquelle dispersion comprend :

- un premier composant, lequel premier composant comprend un premier prépolymère polyuréthane ou une première émulsion de prépolymère polyuréthane ;

- un deuxième composant, lequel deuxième composant comprend une phase de milieu choisie parmi une deuxième émulsion de prépolymère polyuréthane, une dispersion de polyuréthane à basse teneur en solides, un latex de germes et les combinaisons de telles phases ;

- et un agent d'allongement de chaînes ;

et dans laquelle composition ladite dispersion de polyuréthane à teneur en solides ultra-haute présente au moins une teneur en solides, toute charge étant exclue, d'au moins 65 %, en poids rapporté au poids total de ladite dispersion de polyuréthane à teneur en solides ultra-haute, et une viscosité, mesurée à 21 °C à l'aide d'un viscosimètre Brookfield équipé d'une broche n° 4 tournant à 20 t/min, inférieure à 5000 centipoises.

**2.** Composition de matériau d'étanchéité, conforme à la revendication 1, laquelle composition de matériau d'étanchéité comprend en outre un ou plusieurs tensioactif(s), un ou plusieurs dispersant(s), un ou plusieurs épaississant(s), un ou plusieurs pigment(s), une ou plusieurs charge(s), un ou plusieurs agent(s) de résistance au gel-dégel, un ou plusieurs agent(s) de neutralisation, un ou plusieurs plastifiant(s), ou une combinaison de tels agents.

**3.** Composition de matériau d'étanchéité, conforme à la revendication 2, laquelle composition de matériau d'étanchéité comprend de 25 % à moins de 100 % de ladite dispersion de polyuréthane à teneur en solides ultra-haute, en poids rapporté au poids de la composition de matériau d'étanchéité.

**4.** Composition de matériau d'étanchéité, conforme à la revendication 2, laquelle composition de matériau d'étanchéité comprend de 0,1 à 5 % en poids dudit ou desdits tensioactif(s), ou laquelle composition de matériau d'étanchéité comprend de 0,1 à 5 % en poids dudit ou desdits dispersant(s), ou laquelle composition de matériau d'étanchéité comprend de 0,1 à 5 % en poids dudit ou desdits épaississant(s), ou laquelle compo-sition de matériau d'étanchéité comprend de 0 à moins de 10 % en poids dudit ou desdits pigment(s), ou laquelle composition de matériau d'étanchéité comprend de 0 à 75 % en poids de ladite ou desdites charge(s), ou laquelle composition de matériau d'étanchéité comprend de 0,1 à 2 % en poids dudit ou desdits agent(s) de résistance au gel-dégel, ou laquelle composition de matériau d'étanchéité comprend de 0,1 à 1 % en poids dudit ou desdits agent(s) de neutralisation, ou laquelle composition de matériau d'étanchéité comprend de 0 à 12 % en poids dudit ou desdits plastifiant(s).

**5.** Composition de matériau d'étanchéité, conforme à la revendication 2, laquelle composition de matériau d'étanchéité comprend en outre de 0,1 à moins de 10 % en poids d'un ou de plusieurs pigment(s), et laquelle composition de matériau d'étanchéité présente une flexibilité en allonge-ment d'au moins 650 % à -25 °C.

**6.** Composition de matériau d'étanchéité, conforme à la revendication 2, laquelle composition de matériau d'étanchéité ne contient pratique-ment pas de pigment(s), et laquelle composition de matériau d'étanchéité présente une flexibilité en allongement d'au moins 400 % à - 25 °C.

**7.** Composition de matériau d'étanchéité, conforme à la revendication 2, laquelle composition de matériau d'étanchéité présente un taux de reprise élastique de 50 % ou plus à -25 °C.

**8.** Composition de matériau d'étanchéité, conforme à la revendication 2, laquelle composition de matériau d'étanchéité présente un taux de retrait inférieur à 20 %.

**9.** Composition de matériau d'étanchéité, conforme à la revendication 1, dans laquelle ledit premier composant comprend une ou plusieurs première(s) résine(s) polymère(s) et ledit deuxième composant comprend une ou plusieurs deuxième(s) résine(s) polymère(s), et dans laquelle le rapport des tailles moyennes en volume des particules de ladite première résine polymère et de ladite deuxième résine polymère vaut de 1/5 à 1/2.

**10.** Composition de matériau d'étanchéité, conforme à la revendication 9, dans laquelle ladite dispersion de polyuréthane à teneur en solides ultra-haute comprend 20 à 40 % en poids de ladite ou desdites première(s) résine(s) polymère (s), en particules de taille allant de 0,04 à 5,0 $\mu$m, et 60 à 80 % en poids de ladite ou desdites deuxième(s) résine (s) polymère(s), en particules de taille allant de 0,05 à 5,0 $\mu$m, par rapport au poids total de ladite ou desdites première(s) résine(s) polymère(s) et de ladite ou desdites deuxième(s) résine(s) polymère(s).

**11.** Composition de matériau d'étanchéité, conforme à la revendication 1, dans laquelle ledit latex de germes est choisi dans l'ensemble constitué par les dispersions, émulsions et latex de polymères d'oléfines, de résines époxy, de silicone, de polymères de styrène, d'acrylate, de buta-diène, d'isoprène, d'acétate de vinyle ou de leurs copolymères, et leurs mélanges.

**12.** Composition de matériau d'étanchéité, conforme à la revendication 1, dans laquelle ledit latex de germes est une phase huileuse émulsifiée dans de l'eau.

**13.** Composition de matériau d'étanchéité, conforme à la revendication 1, dans laquelle ledit premier prépolymère polyuréthane ou ledit deuxième prépolymère polyuréthane est un produit de réaction d'au moins un polyisocyanate et d'au moins un polyol.

**14.** Composition de matériau d'étanchéité, conforme à la revendication 13, dans laquelle ledit polyisocyanate est aromatique ou aliphatique, et ledit polyol est choisi dans l'ensemble formé par les polyéthers, polyesters, polycarbonates, et polyols d'huiles naturelles de graines, ainsi que leurs combinaisons.

**15.** Composition de matériau d'étanchéité, conforme à la revendication 13, dans laquelle ledit premier prépolymère polyuréthane ou ledit deuxième prépolymère polyuréthane porte des groupes terminaux isocya-nate ou des groupes terminaux hydroxyle.

**16.** Composition de matériau d'étanchéité, comprenant une dispersion aqueuse de polyuréthane à teneur en solides ultra-haute, laquelle dispersion comprend :

- un premier composant, lequel premier composant comprend une première émulsion de prépolymère polyuréthane ;
- un deuxième composant, lequel deuxième composant comprend une dispersion, une émulsion ou un latex de polymère d'acrylate ;
- et un agent d'allongement de chaînes ;

et dans laquelle composition ladite dispersion de polyuréthane à teneur en solides ultra-haute présente au moins une teneur en solides, toute charge étant exclue, d'au moins 65 %, en poids rapporté au poids total de ladite dispersion de polyuréthane à teneur en solides ultra-haute, et une viscosité, mesurée à 21 °C à l'aide d'un viscosimètre Brookfield équipé d'une broche n° 4 tournant à 20 t/min, inférieure à 5000 centipoises,

et laquelle composition comprend en option un ou plusieurs tensioactif(s), en option un ou plusieurs dispersant(s), en option un ou plusieurs épaissis-sant(s), en option un ou plusieurs pigment(s), en option une ou plusieurs charge (s), en option un ou plusieurs agent(s) de résistance au gel-dégel, en option un ou plusieurs agent(s) de neutralisation, en option un ou plusieurs plastifiant(s), ou une combinaison de tels agents.

**FIG. 1**

**FIG. 2**

**FIG. 3**

EP 1 991 597 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4130523 A
- US 4456726 A
- US 5340858 A
- US 5340859 A
- US 5350787 A
- US 5426146 A
- US 5496882 A
- US 5498655 A
- GB 1162409 A
- US 20060128885 A1
- US 6087440 A
- US 875657 P
- US 87565706 P